# EUROPEAN PATENT SPECIFICATION

(11) **EP 3 427 464 B1**
(45) Date of publication and mention of the grant of the patent: **13.05.2020**
(21) Application number: 17716707.9
(22) Date of filing: 28.03.2017
(51) Int. Cl.: H04L 29/06

(54) **SYSTEMS AND METHODS FOR AUTHENTICATING USER FOR SECURE DATA ACCESS USING MULTI-PARTY AUTHENTICATION SYSTEM**
SYSTEME UND VERFAHREN ZUM AUTHENTIFIZIEREN EINES BENUTZERS FÜR SICHEREN DATENZUGRIFF ANHAND EINES MEHRPARTEIENAUTHENTIFIZIERUNGSSYSTEM
SYSTÈMES ET PROCÉDÉS D'AUTHENTIFICATION D'UN UTILISATEUR POUR UN ACCÈS SÉCURISÉ À DES DONNÉES À L'AIDE D'UN SYSTÈME D'AUTHENTIFICATION À PLUSIEURS PARTIES

(30) Priority: 04.04.2016 US 201615090355
(43) Date of publication of application: 16.01.2019
(73) Proprietor: Mastercard International Incorporated, Purchase, New York 10577 (US)
(72) Inventor: KOHLI, Manoneet, O'fallon MT 63368 (US)
(74) Representative: D Young & Co LLP
(86) International application number: PCT/US2017/024418
(87) International publication number: WO 2017/176495

(56) References cited:
- US-A1- 2003 115 142
- US-A1- 2007 198 435
- US-A1- 2011 145 899
- US-A1- 2013 262 857

## Description

### CROSS-REFERENCE TO RELATED APPLICATION

This application claims the benefit of, and priority to, U.S. Application No. 15/090,355 filed on April 4, 2016.

### BACKGROUND

The field of the present disclosure relates generally to authentication of a user and, more particularly, to systems and methods for authenticating the user attempting to access secure data using a multi-party authentication system.

Merchants and service providers often store secure data associated with customers. For example, a medical service provider (e.g., a hospital), may store medical records of patients that have visited the medical service provider. In another example, a bank stores financial information associated with accounts of its customers. The secure data may include sensitive information about the customers. In other words, the customers often do not want the secure data to be accessed by third parties without the customer's consent. Therefore, the merchants and service providers may use security measures to prevent unauthorized access to the secure data.

At least some merchants and service providers have online portals to enable the customers to access the secure data in real-time without visiting the merchant or service provider. However, the merchants and service providers that have such online portals face a unique challenge because the secure data is accessed remotely. Unlike when a customer is physically at the merchant or service provider, the merchant or service provider cannot physically inspect the user accessing the portal or any physical credentials such as a driver's license to verify that the actual legitimate customer is in fact accessing the secure data. Some security measures such as user credentials, security questions, and the like are employed by the merchants and service providers to prevent unauthorized access. The online portals may also include fraud detection systems to identify potential unauthorized users. Once a customer has been authenticated, the online portal may permit or authorize the customer to view and otherwise use the secure data.

However, unauthorized users may still be able to pass through these known security measures. Some unauthorized users may obtain user credentials and other security information from the customer without the customer's knowledge to attempt to authenticate the unauthorized user as the customer. As a result, the merchants and service providers may add an authentication system configured to authenticate a user based on another unique identifier. However, although customers may want to prevent unauthorized access to the secure data, the customers may also wish to access the secure data without passing through many authentication challenges themselves.

Therefore, an authentication system is needed which is capable of verifying that a customer is accessing secure data using a unique identifier associated with the customer.
Prior Art includes: US 2003/0115142A1, US 2007/198435A1, US 2011/145899A1, US 2013/262857 A1.

### SUMMARY OF THE INVENTION

The present invention is defined by the appended independent claims 1, 7, and 15.

### BRIEF DESCRIPTION OF THE DRAWINGS

FIGS. 1-5 show example embodiments of the methods and systems described herein.
FIG. 1 is a simplified block diagram of a data access system.
FIG. 2 is an expanded block diagram of an example embodiment of a client device for use in the data access system shown in FIG. 1.
FIG. 3 illustrates an example configuration of a host system for use in the data access system shown in FIG. 1.
FIG. 4 is a flowchart of an example process for authenticating a user for access to secure data provided by a first data provider using the data access system of FIG. 1, in accordance with one example embodiment of the present disclosure.
FIG. 5 is a diagram of components of one or more example computing devices that may be used in embodiments of the described systems and methods.

### DETAILED DESCRIPTION

The field of the present disclosure relates generally to authenticating users for access to secure data, and more particularly, to systems and methods for authenticating users for access to secure data using a multi-party authentication system.

The system (referred to as a "data access system") described herein is configured to authenticate a customer's identity for access to secure data through a first data provider. In particular, the system is configured to transmit an authentication challenge message to a user device associated with the customer when access to the secure data is requested, and authenticate the customer based on a response to the authentication challenge. In the example embodiment, the data access system includes a user device associated with a customer, a provider device, and an authentication system. The authentication system includes a directory device and an authentication device. Each computer device of the data access system is communicatively coupled to a network. The network may include a cellular network, an online network (e.g., internet), or another form of wide area communication networks.

The user device is a computing device associated with the customer, for example, a smartphone, a tablet, a phablet, a notebook, a smartwatch, and the like. In the example embodiment, the user device is a smartphone of the user. The user device includes a processor and a memory in communication with the processor. The user device may also include other components such as a display, a fingerprint reader, and a camera to receive or generate authentication information from the customer as described herein. The user device communicates with the data access system through a network. The user device may be one device or it could be multiple devices. For example, if the requestor is the customer, the user device may be the customer's phone. In another example, if the requestor is the customer's doctor, the requesting user device may be the doctor's laptop and the authenticating user device may be the customer's phone.

The provider device is in communication with the user device and the authentication system. The user device includes a processor and a memory in communication with the processor. The provider device is associated with the first data provider, where the user requests access to secure data. The secure data is stored in memory associated with at the provider device.

The directory device includes a processor and a memory. In the example embodiment, the directory device is configured to determine the type of authentication to be requested during the authentication process. Specifically, the directory device determines if the challenge message should be biometric or device authentication. In some embodiments, the directory device may store a list of customers enrolled in an authentication service provided by the authentication system as described herein.

The authentication device includes a processor and a memory. In the example embodiment, the authentication device is in communication with the provider device, the directory device, and the user device. The authentication computing device includes one or more host computing systems that store authentication information associated with a plurality of customers.

In the example embodiment, the authentication system is associated with an authentication service. The authentication service may be provided to hospitals, banks, schools and/or other data providers. In one embodiment, the authentication system may store, receive, retrieve, and/or otherwise access a lookup table including authentication information for each data provider using the authentication service.

A customer of the first data provider may register one or more accounts associated with the first data provider to access the secure data. The user accounts are used to provide selective access to the secure data to the customer and other parties with the customer's permission to access the secure data. The customer may provide user information (e.g., name, address, password, etc.) to the first data provider to register the user account. In the example embodiment, when registering for a user account, the user device is linked to the account.

When registering a user account, the user may be given an option to enroll the user account in the authentication service. In some embodiments, the authentication system may be configured to identify an existing authentication profile associated with the customer based, at least in part, on the payment information or user information of the user account. If an existing authentication profile does not exist, the user may be directed through the enrollment process to provide authentication information, such as biometric information or device information, for authentication attempts. The information provided during the enrollment process is stored by the authentication system in an authentication profile associated with the customer and the customer's account.

Subsequently, when the customer initiates an access request (e.g., logging on to an online portal of the first data provider) at the user device or another computing device, the provider device and/or the directory device is configured to detect whether or not the account used to initiate the access request is enrolled with the authentication service. In at least some embodiments, the access request may be submitted by a requestor (other than the customer), such as a doctor. In such embodiments, a notification may be sent to the user device to approve or decline the access request. If the user account is enrolled, the provider device may push an authentication request to the authentication system indicating that an access request by an enrolled account has been submitted.

The authentication system is configured to receive and/or retrieve information associated with the customer from the enrollment process to authenticate the customer. For example the authentication system may identify what authentication method (e.g., device authentication, biometric authentication) the customer selected during enrollment. The authentication system is configured to generate a challenge message based on the authentication information associated with the customer. The challenge message is configured to request authentication information from the user device and/or the customer as describe herein.

The user device receives the challenge message from the authentication system. The challenge message requests authentication information from the customer, such as, but not limited to, biometric information, device information, and customer information. In one example, in response to the challenge message from the authentication system, the user device may prompt the customer to input the authentication information. For example, the user device may prompt the customer to input biometric information such as a fingerprint. In another example, the user device may prompt the customer to take a picture of his or her face to verify the customer's identity.

Alternatively, the user device may automatically provide the authentication information if the customer selected a device authentication method. In such an example, the user device may be configured to decrypt an encrypted input within the challenge message from the authentication system. The user device may store an encryption key that, when used on the encrypted input, decrypts the input. The user device may process the decrypted input accordingly to verify and authenticate the customer. In another example, the user device may store a unique identifier that may be provided in response to the challenge message.

In yet another example, the challenge message may request that the user device collects authentication information through a paired device. Pairing may include a process of authenticating two devices to ensure that wireless communication and security is established between the two devices. Devices that have been paired may automatically recognize each other and connect, disconnect, and the like, with ease. By pairing, devices may be connected to each other and/or networks via different wireless protocols, for example, Bluetooth, WiFi, and the like. Examples of devices that may be paired with each other include smartphones, tablets, phablets, smartwatches, smartbands, smartglasses, keyboards, printers, smart televisions, remote controllers, laundry machines, refrigerators, dishwashers, and the like. The paired device may include one or more of a display such as a touch screen, a camera, a microphone, a sensor, and the like, which may be used by a customer to input biometric information that can be used to identify a person.

In the example embodiment, the user device generates a challenge response with the collected authentication information and transmits the challenge response to the authentication system. The authentication system compares the authentication information from the challenge response to the stored authentication information from the enrollment process to determine if the customer is authenticated. For example, the authentication system may determine whether or not the authentication information from the challenge response and the stored authentication information from the enrollment process substantially match.

The authentication system notifies the provider device whether or not the customer is authenticated. Based on the determination by the authentication system, the provider device may provide the customer access to the secure data. In certain embodiments, the authentication system or the provider device generates a token for the computing device requesting access to the secure data to identify the customer as authenticated. If the customer is not authenticated, the provider device may alert the requestor and deny the requestor access to the secure data. In some embodiments, the provider device may notify the user device of a failed attempt to access the secure data.

In the example embodiment, from the access request being submitted to authentication, the steps described above are process in substantially real-time or within a predetermined period of time (e.g., seconds, minutes, or hours). As used herein "instantaneous" or "real-time" refers outcomes occurring at a substantially short period after an input. The time period is a result of the capability of the system implementing processing of inputs to generate an outcome. Events occurring instantaneously occur without substantial intentional delay.

The methods and systems described herein may be implemented using computer programming or engineering techniques including computer software, firmware, hardware or any combination or subset thereof, wherein the technical effects may be achieved by performing one of the following steps: (a) receiving user credentials and authentication information associated with a user of a first data provider; (b) storing the user credentials and authentication information in an authentication profile associated with the user at an authentication system; (c) receiving user credentials from the first data provider; (d) detecting that the stored authentication profile includes user credentials that match the received user credentials; (e) transmitting a challenge message to a user device associated with the user, the challenge message prompting the user device for authentication information; (f) receiving a challenge response from the user device, the challenge response including collected authentication information; (g) authenticating the user based on the authentication profile and the collected authentication information of the challenge response; and (h) notifying the first data provider that the user is authenticated.

The systems and methods described herein are configured to facilitate (a) improved authentication methods for authenticating users attempting to access a first data provider; (b) multi-party authentication for remote data access; and (c) reduced fraudulent authentications to access the secure data.

Described herein are computer systems such as a user device, a provider device, an authentication device, and a directory device. As described herein, all such computer systems include a processor and a memory.

Further, any processor in a computer device referred to herein may also refer to one or more processors wherein the processor may be in one computing device or a plurality of computing devices acting in parallel. Additionally, any memory in a computer device referred to herein may also refer to one or more memories wherein the memories may be in one computing device or a plurality of computing devices acting in parallel.

As used herein, a processor may include any programmable system including systems using micro-controllers, reduced instruction set circuits (RISC), application specific integrated circuits (ASICs), logic circuits, and any other circuit or processor capable of executing the functions described herein. The above examples are example only, and are thus not intended to limit in any way the definition and/or meaning of the term "processor."

As used herein, the term "database" may refer to either a body of data, a relational database management system (RDBMS), or to both. As used herein, a database may include any collection of data including hierarchical databases, relational databases, flat file databases, object-relational databases, object oriented databases, and any other structured collection of records or data that is stored in a computer system. The above examples are example only, and thus are not intended to limit in any way the definition and/or meaning of the term database. Examples of RDBMS's include, but are not limited to including, Oracle® Database, MySQL, IBM® DB2, Microsoft® SQL Server, Sybase®, and PostgreSQL. However, any database may be used that enables the systems and methods described herein. (Oracle is a registered trademark of Oracle Corporation, Redwood Shores, California; IBM is a registered trademark of International Business Machines Corporation, Armonk, New York; Microsoft is a registered trademark of Microsoft Corporation, Redmond, Washington; and Sybase is a registered trademark of Sybase, Dublin, California.)

In one embodiment, a computer program is provided, and the program is embodied on a computer readable medium. In an example embodiment, the system is executed on a single computer system, without requiring a connection to a sever computer. In a further embodiment, the system is being run in a Windows® environment (Windows is a registered trademark of Microsoft Corporation, Redmond, Washington). In yet another embodiment, the system is run on a mainframe environment and a UNIX® server environment (UNIX is a registered trademark of X/Open Company Limited located in Reading, Berkshire, United Kingdom). The application is flexible and designed to run in various different environments without compromising any major functionality. In some embodiments, the system includes multiple components distributed among a plurality of computing devices. One or more components may be in the form of computer-executable instructions embodied in a computer-readable medium.

As used herein, an element or step recited in the singular and proceeded with the word "a" or "an" should be understood as not excluding plural elements or steps, unless such exclusion is explicitly recited. Furthermore, references to "example embodiment" or "one embodiment" of the present disclosure are not intended to be interpreted as excluding the existence of additional embodiments that also incorporate the recited features.

As used herein, the terms "software" and "firmware" are interchangeable, and include any computer program stored in memory for execution by a processor, including RAM memory, ROM memory, EPROM memory, EEPROM memory, and non-volatile RAM (NVRAM) memory. The above memory types are example only, and are thus not limiting as to the types of memory usable for storage of a computer program.

The systems and processes are not limited to the specific embodiments described herein. In addition, components of each system and each process can be practiced independent and separate from other components and processes described herein. Each component and process also can be used in combination with other assembly packages and processes.

As used herein, the terms "transaction card," "financial transaction card," and "payment card" refer to any suitable transaction card, such as a credit card, a debit card, a prepaid card, a charge card, a membership card, a promotional card, a frequent flyer card, an identification card, a gift card, and/or any other device that may hold payment account information, such as mobile phones, smartphones, personal digital assistants (PDAs), key fobs, and/or computers. Each type of transaction card can be used as a method of payment for performing a transaction.

The following detailed description illustrates embodiments of the disclosure by way of example and not by way of limitation. It is contemplated that the disclosure has general application to authenticate remote purchases via a user device.

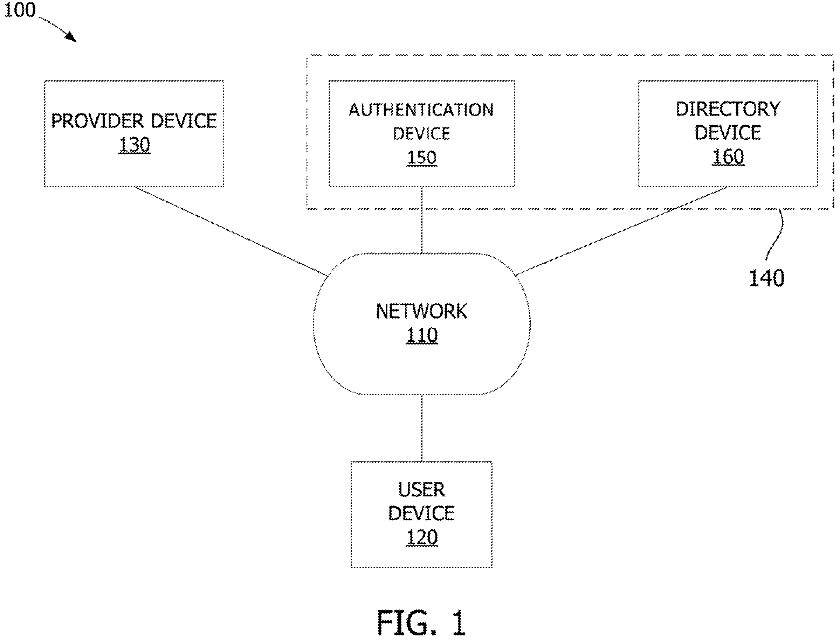

FIG. 1 is a diagram illustrating an example of a data access system 100 that may be used, for example, in providing access to secure data associated with a user. Data access system 100 includes a plurality of computing devices that are connected to each other via a network 110. Network 110 may include the Internet, a local network, a home network, a combination of networks and the like. The computing devices include a user device 120, a provider device 130, and an authentication system 140. The authentication system 140 includes an authentication device 150 and a directory device 160. It is to be understood that authentication device 150 and directory device 160 may be the same computing device and/or perform at least a portion of the functions described herein for the other computing device.

User device 120 is a computing device that is configured to facilitate authentication of a user requesting access to secure data. User device 120 refers to a computing device associated with the user, for example, a smartphone, a tablet, a phablet, a notebook, a smartwatch, and the like. In the example embodiment, user device 120 is configured to facilitate authentication of the user. The user device 120 accepts input from the user. In the example embodiment, user device 120 communicates with data access system 100 through the network 110. User device 120 may also be configured to receive or generate authentication information as described further herein.

Provider device 130 and authentication system 140 are also connected to the network 110. Provider device 130 is associated with a first data provider that stores secured data associated with one or more customers. For example, the provider device 130 may be associated with a data provider that stores medical records, a bank that stores finical records, or a school that store student records. Provider device 130 has an online portal accessible through network 110 to enable customers to access the secured data remotely. In one example, a customer may access the online portal with the user device 120. In another example, the customer may access the online portal through a different computer device. Alternatively, a third party associated with the customer such as a doctor may access the online portal. Customers may register one or more accounts with the online portal to access the secure data. Provider device 130 may store account information including user credentials (username, password, etc.) for the registered accounts to authenticate a customer attempting to user to the online portal.

In this example, during registration of an account or at a later time, the customer may enroll the account for an authentication service provided by a second data provider. In particular, authentication system 140 is associated with the second data provider and performs the authentication service. In some implementations, the authentication service is used by the second data provider to authenticate users for other data. For example, the authentication service may be used by the second data provider to authenticate transactions. The second data provider enables the first data provider to use the authentication service to authenticate users accessing secure data at the first data provider. Provider device 130 and/or authentication system 140 may store a list of accounts enrolled in the authentication service.

During an enrollment process, user information (e.g., biometric information) and device information (e.g., a device ID) of user device 120 are provided to authentication system 140. The user information and the device information are also collectively referred to as "authentication information". In some embodiments, if a customer is enrolled with the authentication service already to access data provided by the second data provider (e.g., the data provider linked to the authentication item), authentication system 140 may link the stored information associated with customer during the enrollment process rather than collect additional authentication information. Authentication system 140 is configured to store the authentication information as part of an authentication profile of the customer. In some embodiments, authentication system 140 includes one or more databases (not shown) to store the authentication information. In some embodiments, the customer may specify a method of authentication during enrollment to be used for subsequent authentication attempts. Alternatively, a method of authentication may be automatically selected based on the information provided by the customer. Once user device 120 is enrolled, authentication system 140 may push an authenticator application to user device 120 and the authenticator application may be installed on user device 120.

Directory device 160 of authentication system 140 is configured to store authentication profiles of customers. Based on information received from the customer (e.g., through user device 120) and provider device 130, directory device 160 determines if the customer is associated with a stored authentication profile. If an authentication profile is not found, directory device 160 may notify user device 120 and/or provider device 130. If an authentication profile is found, directory device 160 identifies an authentication method from the enrollment profile and notifies authentication device 150.

Authentication device 150 is configured to store authentication information associated with the authentication profiles and generates challenge messages to be sent to user device 120 as described herein. Although only one authentication device 150 is shown, authentication system 140 may include multiple authentication devices 150. For example, authentication system 140 may include a biometric authentication server and a device authentication server. Authentication device 150 may further be configured to receive a challenge response from user device 120 to determine if the customer is authenticated.

In one example, user credentials of a customer's account are entered in the online portal of provider device 130. The user credentials may be, for example, the user information the customer entered during enrollment. If valid user credentials have been entered, provider device 130 transmits the user credentials to directory device 160 to demine if the registered account is enrolled in the authentication service. In another embodiment, provider device 130 is configured to detect whether or not the account is enrolled in the authentication service. In some embodiments, if the account is enrolled, directory device 160 and/or another device of system 100 may be configured to push or transmit an entry request notification to user device 120 that an access request has been submitted. The access request notification may include information about the access request, such as, but not limited to, the type of data being requested, the first data provider and the user requesting the access. The access request notification may include an input prompt for the customer to approve or decline the access request. That is, access request notification enables the customer to permit users other than the customer (e.g., specialty doctors, banks) to initiate access requests with the customer's user credentials.

In the example embodiment, provider device 130 notifies authentication system 140 to begin the authentication process when it is determined the account is enrolled in the authentication service. More specifically, provider device 130 transmits an authentication request to authentication system 140. The authentication request is configured to identify the account, the customer associated with the account, the access request, and/or whether or not the customer approved the entry request. In response to authentication request, authentication system 140 is configured to retrieve the authentication profile of the customer and the authentication information associated with the customer to determine a method of authentication (biometric, password, device-to-device, etc.) selected during the enrollment process.

Based on the retrieved authentication profile, authentication device 150 is configured to generate a challenge message for user device 120. In other embodiments, authentication device 150 may be configured to cause another computing device (e.g., directory device 160) to generate the challenge message. The challenge message is transmitted to user device 120. The challenge message is configured to prompt the customer and/or user device 120 to provide authentication information that corresponds to the retrieved authentication profile. In one example, the challenge message may prompt the customer to provide biometric information such as a fingerprint at user device 120 to be compared to biometric information provided during the enrollment process.

In another example, the authenticator application is a locked file. Notably, the locked file is linked to the customer's user profile on user device 120, and is only activated when the customer's user profile is active. Accordingly, if another user profile (e.g., a profile for a family member of the customer) is currently active on the user device 120, the locked file is inactive. The locked file may be for example, an .exe file, an .apk file, or a .bat file. Alternatively, the locked file may have any format that enables the locked file to function as described herein. In the example embodiment, the locked data file runs as a background process whenever the customer's user profile is active. When the background process is running, the locked data file may be referred to as "open" (i.e., able to receive and process a challenge message). When the customer's user profile is not active, the background process does not run, and locked data file is unable to receive and process a challenge message. In alternative embodiments, the locked data file is called by a separate authenticator application to process a challenge message received at the authenticator application. The authenticator application is only able to successfully call the locked data file if the customer's user profile is active.

In this example, when the user makes an entry request at user device 120 using the registered user account, data access system 100 may perform a device to device authentication for the customer using enrolled user device 120. For example, the provider device 130 may transmit an authentication request to authentication system 140, causing authentication device 150 to transmit a challenge message to user device 120. Authentication device 150 stores, for example, records of user device 120 and records of locked file. Authentication device 150 generates challenge message based on the stored records.

User device 120 receives challenge message from authentication system 140. If the user profile of the customer is active, the locked file installed as part of the device enrollment is activated, and receives the challenge. Otherwise, the locked file does not receive the challenge, preventing the customer from being authenticated. In the example embodiment, challenge message is an encrypted message, and the locked file is able to decrypt the encrypted message. To authenticate user device 120, the locked file processes challenge message, generates a challenge response, and causes the challenge response to be transmitted from user device 120 to the device authentication server.

The locked file, in at least some embodiments, uses one or more encryption keys to encrypt and decrypt messages sent to and from authentication device 150. For example, locked file may encrypt the challenge response before transmission. In the example embodiment, the locked file includes two layers of encryption. A first layer of encryption enables the locked file to securely communicate with the device authentication server. A second layer of encryption ensures the locked file is only activated when the user profile associated with the customer is active on user device 120, as described above.

For example, in the example embodiment, the locked data file is, protected by one or more encryption keys stored on user device 120. The encryption keys may be installed, for example, as part of a device enrollment process. The encryption keys are bound to the customer's user profile such that an operating system of user device 120 can only access the encryption keys needed to run the locked data file when the customer's user profile is active. If the customer's user profile is not active, the operating system cannot access the necessary encryption keys, and cannot run the locked data file. In other embodiments, access to the locked data file is limited using other techniques (e.g., using file system access rights).

The challenge message may be any message that locked file is able to generate a challenge response to. For example, in one embodiment, the challenge message instructs the locked file to perform a mathematical operation, and challenge response includes the result of the mathematical operation. In another embodiment, the challenge message requests a device ID (e.g., a MAC address, an IMEI number, etc.) for user device 120, and the challenge response includes the requested device ID.

In a further embodiment, the challenge message requests the locked file to confirm a current activated lifetime of the locked file, and the challenge response includes the current activated lifetime. The current activated lifetime is defined as the time difference between the current time (i.e., the time the challenge is received) and the time the locked file was originally received at user device 120. The current activated lifetime is known only to the locked file and the authentication device 150 transmitting the challenge message.

In yet another example, challenge message may be configured to authenticate user device 120 using a paired device. Pairing may include a process of authenticating two devices to ensure that wireless communication and security is established between the two devices. Devices that have been paired may automatically recognize each other and connect, disconnect, and the like. By pairing, devices may be connected to each other and/or networks via different wireless protocols, for example, Bluetooth, WiFi, and the like. Examples of devices that may be paired with each other include smartphones, tablets, phablets, smartwatches, smartbands, smartglasses, keyboards, printers, smart televisions, remote controllers, laundry machines, refrigerators, dishwashers, and the like. The paired device may include one or more of a display such as a touch screen, a camera, a microphone, a sensor, and the like, which may be used by a customer to input biometric information that can be used to identify a person.

In this example, authentication device 150 is configured to issue challenge message to user device 120. Challenge message may be configured for biometric, device, or another method of authentication. User device 120, acting as a beacon, pushes challenge message to one or more paired devices within a predetermined range of user device 120. In some embodiments, user device 120 may selectively transmit challenge message to at least one paired device. For example, user device 120 may be configured to determine if paired device is configured to provide a corresponding challenge response to challenge message. For example, a smartwatch may not be configured to receive biometric information and therefore does not receive a biometric challenge message. In other embodiments, challenge message is automatically pushed to each paired device.

In response to receiving the challenge, paired device may transmit a response to user device 120 indicating that paired device is available or is not available for performing authentication. In some embodiments, if paired device is capable of performing authentication, paired device may wait until receiving an input from the customer, such as a biometric input. For example, the input mechanism may be a camera configured to capture an image of the customer or a portion of the customer (e.g., the customer's face). As another example, an input mechanism of paired device may include a sensor configured to sense a pulse, heart rate, blood pressure, and the like, of the customer. It should also be appreciated that paired device may include any sensor or other data capturing element for capturing biometric information of the customer. As another example, the biometric information may be based on a customer input including hand geometry, earlobe geometry, retina and iris patterns, voice waves, keystroke dynamics, DNA, signatures, and the like. Alternatively, paired device may automatically provide authentication information, such as device information of user device 120 or paired device. In response to collecting the authentication information from the customer and/or paired device, paired device may transmit the collected authentication information to user device 120.

In the example embodiment, once the authentication information has been collected, user device 120 is configured to generate a challenge response with the collected authentication information. The challenge response is transmitted to authentication system 140 to determine if the customer is authenticated or declined. More specifically, authentication system 140 is configured to compare the collected authentication information to the authentication profile associated with the customer to determine whether or not the customer is authenticated. In some embodiments, the customer is authenticated if the collected authentication information and the stored authentication information from the authentication profile substantially match. In certain embodiments, authentication system 140 may be configured to generate an authentication value for each set of authentication information and compare the authentication values. If the difference between the authentication values is within a predetermined threshold, the customer may be authenticated. Although the determination of authenticating the customer's identity is described with respect to authentication system 140, it is also to be understood that user device 120 may retrieve the stored authentication profile to authenticate the customer by comparing the collected authentication information and the stored authentication information of the authentication profile. In such an embodiment, user device 120 may transmit an indication of successful or unsuccessful authentication of the customer to the provider device 130 via the network 110.

After performing a successful authentication of the customer, the second data provider indicates to the first data provider that the customer has been authenticated. In one example, a cookie or token is transmitted to user device 120 or provider device 130 that indicates user device 120 has been authenticated. In another example, authentication system 140 transmits a notification to provider device 130 indicating the customer has been authenticated. Once the customer has been authenticated, the first data provider may permit or authorize the customer to access the secure data associated with the customer. The customer may view or otherwise use the secure data from the first data provider accordingly. However, if the authentication is unsuccessful (e.g., if no challenge response is received), the customer may be denied access to the online portal and the secure data. In some implementations, the customer may have a predetermined time limit to respond to the challenge message, and if the time limit is exceeded, the authentication is automatically considered unsuccessful.

In at least some embodiments, user device 120 or another computer device used to access the online portal may be configured to detect whether or not the initiated access request has been approved or declined. In certain embodiments, user device 120 may receive a notification indicating that the initiated entry request has been accepted or declined. For declined access requests, provider device 130 may provide the requestor with a reason why the purchase was declined. For example, provider device 130 may indicate that the challenge response was declined.

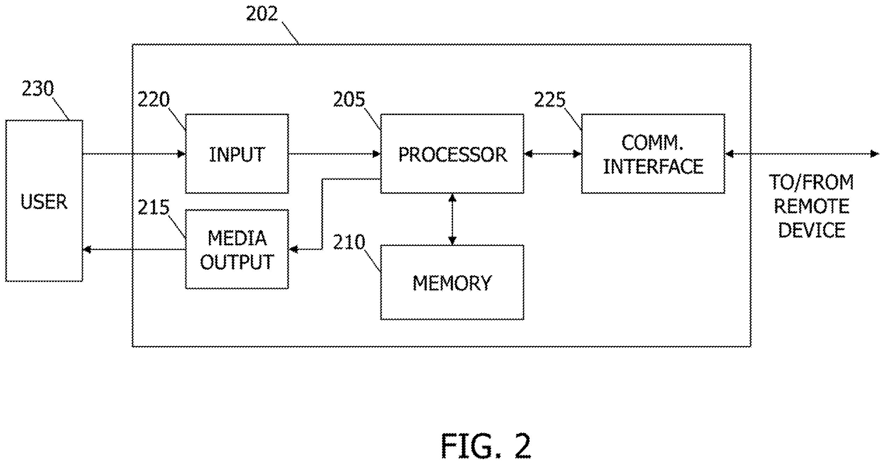

FIG. 2 depicts an exemplary configuration of a remote or user computing device 202, such as user device 120. Computing device 202 may include a processor 205 for executing instructions. In some embodiments, executable instructions may be stored in a memory area 210. Processor 205 may include one or more processing units (*e.g.*, in a multi-core configuration). Memory area 210 may be any device allowing information such as executable instructions and/or other data to be stored and retrieved. Memory area 210 may include one or more computer-readable media. An authentication application, such as locked file may be stored in memory area 210.

Computing device 202 may also include at least one media output component 215 for presenting information to a user 230. Media output component 215 may be any component capable of conveying information to user 230. In some embodiments, media output component 215 may include an output adapter, such as a video adapter and/or an audio adapter. An output adapter may be operatively coupled to processor 205 and operatively coupleable to an output device such as a display device (*e.g.*, a liquid crystal display (LCD), organic light emitting diode (OLED) display, cathode ray tube (CRT), or "electronic ink" display) or an audio output device (*e.g.*, a speaker or headphones). In some embodiments, media output component 215 may be configured to present an interactive user interface (*e.g*., a web browser or client application) to user 230.

In some embodiments, computing device 202 may include an input device 220 for receiving input from user 230. Input device 220 may include, for example, a keyboard, a pointing device, a mouse, a stylus, a touch sensitive panel (*e.g.*, a touch pad or a touch screen), a camera, a gyroscope, an accelerometer, a position detector, and/or an audio input device. A single component such as a touch screen may function as both an output device of media output component 215 and input device 220.

Computing device 202 may also include a communication interface 225, which may be communicatively coupleable to a remote device such as provider device 130 or authentication system 140 (shown in Figure 1). Communication interface 225 may include, for example, a wired or wireless network adapter or a wireless data transceiver for use with a mobile phone network (*e.g.*, Global System for Mobile communications (GSM), 3G, 4G or Bluetooth) or other mobile data network (*e.g.*, Worldwide Interoperability for Microwave Access (WIMAX)).

Stored in memory area 210 are, for example, computer-readable instructions for providing a user interface to user 230 via media output component 215 and, optionally, receiving and processing input from input device 220. A user interface may include, among other possibilities, a web browser and client application. Web browsers enable users 230 to display and interact with media and other information typically embedded on a web page or a website from a web server associated with a merchant. A client application allows users 230 to interact with a server application associated with, for example, a service or data provider.

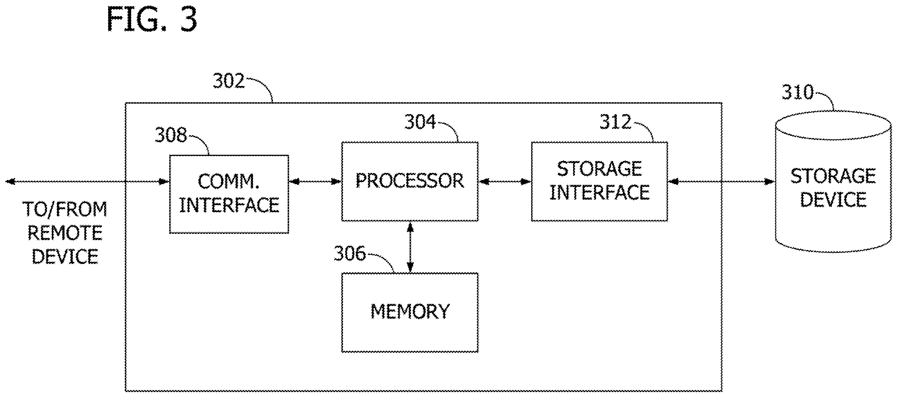

FIG. 3 depicts an exemplary configuration of a host computing device 302, such as authentication system 140. Host computing device 302 may include a processor 304 for executing instructions. Instructions may be stored in a memory area 306, for example. Processor 304 may include one or more processing units (*e.g.,* in a multi-core configuration).

Processor 304 may be operatively coupled to a communication interface 308 such that host computing device 302 may be capable of communicating with a remote device such as computing device 202 shown in FIG. 2 or another host computing device 302. For example, communication interface 308 may receive requests from user computing device 202 via the Internet.

Processor 304 may also be operatively coupled to a storage device 310. Storage device 310 may be any computer-operated hardware suitable for storing and/or retrieving data. In some embodiments, storage device 310 may be integrated in host computing device 302. For example, host computing device 302 may include one or more hard disk drives as storage device 310. In other embodiments, storage device 310 may be external to host computing device 302 and may be accessed by a plurality of host computing devices 302. For example, storage device 310 may include multiple storage units such as hard disks or solid state disks in a redundant array of inexpensive disks (RAID) configuration. Storage device 310 may include a storage area network (SAN) and/or a network attached storage (NAS) system.

In some embodiments, processor 304 may be operatively coupled to storage device 310 via a storage interface 312. Storage interface 312 may be any component capable of providing processor 304 with access to storage device 310. Storage interface 312 may include, for example, an Advanced Technology Attachment (ATA) adapter, a Serial ATA (SATA) adapter, a Small Computer System Interface (SCSI) adapter, a RAID controller, a SAN adapter, a network adapter, and/or any component providing processor 304 with access to storage device 310.

Memory areas 210 (shown in FIG. 2) and 306 may include, but are not limited to, random access memory (RAM) such as dynamic RAM (DRAM) or static RAM (SRAM), read-only memory (ROM), erasable programmable read-only memory (EPROM), electrically erasable programmable read-only memory (EEPROM), and non-volatile RAM (NVRAM). The above memory types are example only, and are thus not limiting as to the types of memory usable for storage of a computer program.

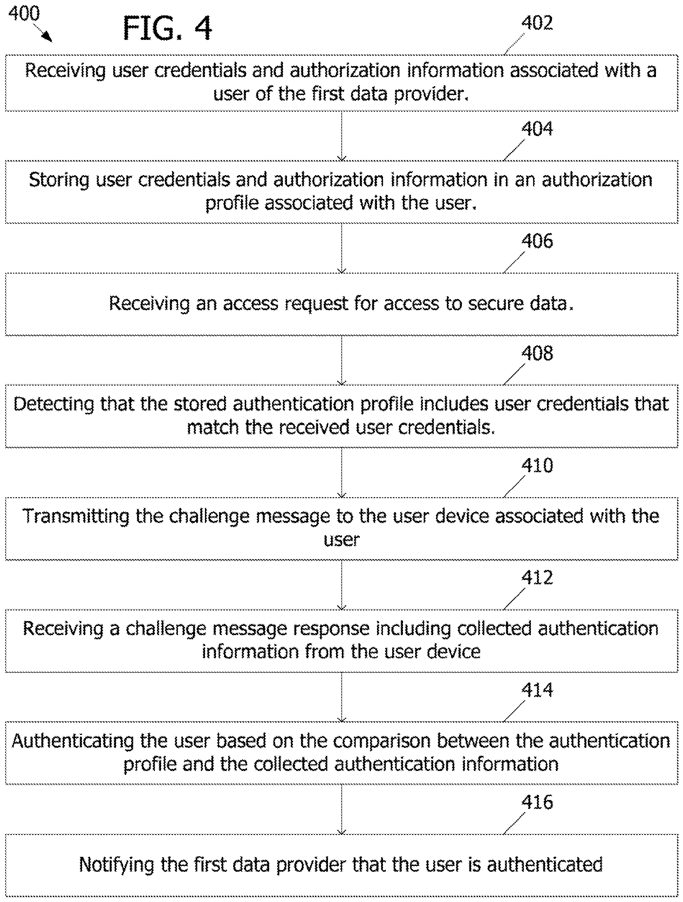

FIG. 4 is a flowchart of an example method 400 for authenticating a user for access to secure data, performed by an authentication system, such as the authentication system 140 of FIG. 1, in accordance with one example embodiment of the present disclosure. More specifically, the authentication system is configured to receive 402 an authentication profile for a customer including authentication information such as biometric or device information associated with the customer during an enrollment process for an authentication service and store 404 the authentication profile within a memory associated with the authentication system.

The authentication system is further configured to receive 406 an access request for access to secure data. The authentication system receives the authentication request over a network. The user access request may be initiated by a requestor other than the customer, such as a specialty doctor, a bank manager, or a teacher. The authentication request may be based on a response from a user device to approve the access request. The response may indicate whether or not the customer has approved the access request. The authentication system is further configured to detect 408 that the stored authentication profile from the enrollment process matches the received user credentials. The authentication system transmits 410 the challenge message to the user device associated with the user. The challenge message is configured to cause the user device to collect authentication information, such as using a locked file or a paired device.

In the example embodiment, the authentication system is further configured to receive 412 a challenge response including the collected authentication information from the user device, authenticate 414 or decline the user based on the comparison between the authentication profile and the collected authentication information. The authentication system notifies 416 the first data provider that the user is authenticated. In response, the first data provider authorizes the user to access the secured data. In some embodiments, the authentication system may calculate an authentication score for each of the collected and stored authentication information. If the difference between the authentication scores is within a predetermined threshold (i.e., the collected and stored authentication information substantially match), the authentication computing device may authenticate the customer. Once authenticated, the authentication computing device may notify the provider device. The provider device may authorize access to the secure data in response to the customer's identity being authenticated.

In the example embodiment, method 400 enables a customer to review access request initiated at the user device or another device and approve or decline the access requests. That is, method 400 enables the customer to approve access request in near real-time or within a predetermined time (e.g., minutes or hours) of the access request being initiated.

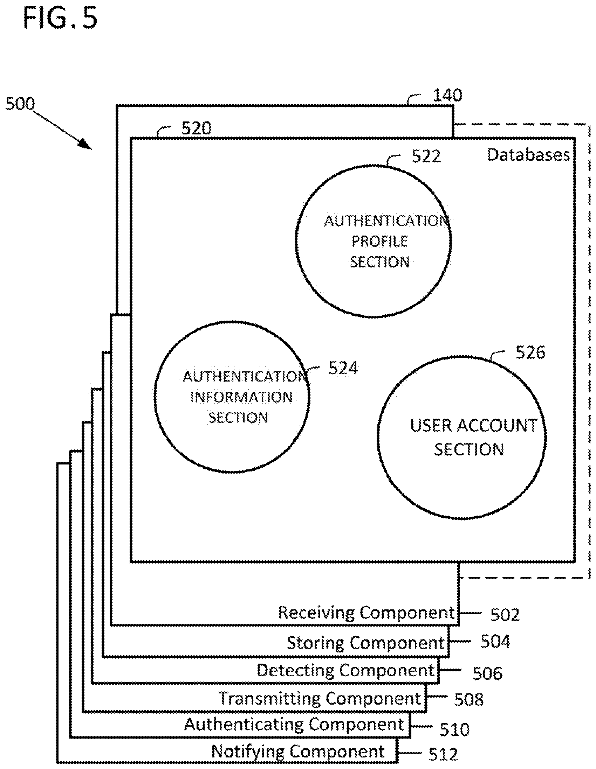

FIG. 5 is a diagram 500 of components of one or more example computing devices that may be used in the method shown in FIG. 4. In particular, diagram 500 includes components of authentication system 140 (shown in FIG. 1). FIG. 5 further shows a configuration of databases including at least database 520. Database 520 is coupled to several separate components within authentication system 140, which perform specific tasks.

Authentication system 140 includes a receiving component 502 configured to receive user credentials and authentication information in an authentication profile associated with the customer during an enrollment process for an authentication service, user credentials from a first data provider, and a challenge response including authentication information collected from a user device. Authentication system 140 also includes a storing component 504 configured to store the authentication profile from the authentication process within a memory and a detecting component 506 configured to detect that the stored authentication profile includes user credentials that match the received user credentials. Authentication system 140 additionally includes a transmitting component 508 configured to transmit a challenge message to a user device associated with the user. Authentication system 140 further includes an authenticating component 510 configured to authenticate the user based on the authentication profile and the collected authentication information of the challenge response and a notifying component 512 configured to notify the first data provider that the user is authenticated or declined.

In an exemplary embodiment, database 520 is divided into a plurality of sections, including but not limited to, an authentication profile section 522, an authentication information section 524, and a user account section 526. These sections within database 520 are interconnected to update and retrieve the information as required.

As will be appreciated based on the foregoing specification, the above-discussed embodiments of the disclosure may be implemented using computer programming or engineering techniques including computer software, firmware, hardware or any combination or subset thereof. Any such resulting computer program, having computer-readable and/or computer-executable instructions, may be embodied or provided within one or more computer-readable media, thereby making a computer program product, i.e., an article of manufacture, according to the discussed embodiments of the disclosure. These computer programs (also known as programs, software, software applications or code) include machine instructions for a programmable processor, and can be implemented in a high-level procedural and/or object-oriented programming language, and/or in assembly/machine language. As used herein, the terms "machine-readable medium," "computer-readable medium," and "computer-readable media" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The "machine-readable medium," "computer-readable medium," and "computer-readable media," however, do not include transitory signals (i.e., they are "non-transitory"). The term "machine-readable signal" refers to any signal used to provide machine instructions and/or data to a programmable processor.

This written description uses examples, including the best mode, to enable any person skilled in the art to practice the disclosure, including making and using any devices or systems and performing any incorporated methods. The patentable scope of the disclosure is defined by the claims.

## Claims

1. A method (400) for authenticating an accessing user for accessing secure data from a first data provider using an authentication system associated with a second data provider, the first data provider being different from the second data provider, the method comprising:
receiving (402), by the authentication system of the second data provider, user credentials and authentication information associated with an enrolling user, the received user credentials including payment card information usable for processing payment card transactions, the received user credentials also useable to access the first data provider;
identifying, by the authentication system, an authentication profile associated with the enrolling user, the authentication profile previously stored at the authentication system;
linking, by the authentication system, the received user credentials and the authentication information to the authentication profile;
storing (404) the received user credentials and authentication information in the authentication profile, wherein the authentication profile is useable by the second data provider for authenticating payment card transactions;
receiving (406), by the authentication system from the first data provider, payment card information associated with the accessing user in response to the accessing user attempting to access secure data stored in the first data provider;
comparing the accessing user payment card information received from the first data provider with the user credentials in the stored authentication profile for the enrolling user;
transmitting (410), in response to the comparison, a challenge message based on the stored authentication profile to a user device associated with the accessing user, the challenge message prompting the user device for authentication information, the user device separate from the first data provider and the second data provider;
receiving (412) a challenge response from the user device, the challenge response including collected authentication information;
authenticating (414), by the authentication system, the accessing user based on the authentication profile for the enrolling user and the collected authentication information in the challenge response to determine that the accessing user is the enrolling user; and
notifying (416), by the authentication system, the first data provider that the accessing user is authenticated, wherein the first data provider permits the accessing user to access the secure data in response to the accessing user being authenticated.

2. The method in accordance with Claim 1, wherein the authentication information includes at least one of biometric data and image data received from the enrolling user.

3. The method in accordance with Claim 1, wherein authentication information includes at least one of device data and a unique identifier stored on the user device.

4. The method in accordance with Claim 1, wherein authenticating the accessing user based on the authentication profile for the enrolling user and the collected authentication information in the challenge response further comprises:
comparing the authentication profile and the collected authentication information; and
authenticating the accessing user if the authentication information of the authentication profile and the collected authentication information match.

5. The method in accordance with Claim 1, further configured to authenticate the accessing user if the authentication information of the authentication profile and the collected authentication information of the challenge response match.

6. The method in accordance with Claim 1 further comprising transmitting, by the authentication system, a token that indicates the accessing user is authenticated to access the secure data to the user device.

7. An authentication system (100) for authenticating an accessing user for accessing secure data from a first data provider, the authentication system associated with a second data provider, the first data provider being different form the second data provider, the authentication system comprising a processor (304) and a memory (306) in communication with the processor, wherein the processor is programmed to:
receive user credentials and authentication information associated with an enrolling user, the received user credentials including payment card information usable for processing payment card transactions, the received user credentials also useable to access the first data provider;
identify, by the authentication system, an authentication profile associated with the enrolling user, the authentication profile previously stored at the authentication system;
link, by the authentication system, the received user credentials and the authentication information to the authentication profile;
store the received user credentials and authentication information in the authentication profile, wherein the authentication profile is usable by the second data provider for authenticating payment card transactions;
receive payment card information associated with the accessing user in response to the accessing user attempting to access secure data stored at the first data provider;
compare the accessing user payment card information received from the first data provider with the user credentials in the stored authentication profile for the enrolling user;
transmit, in response to the comparison, a challenge message based on the stored authentication profile to a user device associated with the accessing user, the challenge message prompting the user device for authentication information, the user device separate from the first data provider and the second data provider;
receive a challenge response from the user device, the challenge response including collected authentication information;
authenticate the accessing user based on the authentication profile for the enrolling user and the collected authentication information in the challenge response to determine that the accessing user is the enrolling user; and
notify the first data provider that the accessing user is authenticated, wherein the first data provider permits the accessing user to access the secure data in response to the accessing user being authenticated.

8. The authentication system in accordance with Claim 7, wherein the user credentials further include at least one of a phone number, a username, and a password.

9. The authentication system in accordance with Claim 7, wherein the secure data includes at least one of a medical record, a bank account, and a student record.

10. The authentication system in accordance with Claim 7, wherein the authentication information includes at least one of biometric data and image data received from the enrolling user.

11. The authentication system in accordance with Claim 7, wherein the authentication information includes at least one of device data and unique identifier stored on the user device.

12. The authentication system in accordance with Claim 7, wherein the processor is further programmed to:
compare the authentication profile and the collected authentication information; and
authenticate the accessing user if the authentication information of the authentication profile and the collected authentication information match.

13. The authentication system in accordance with Claim 7, the processor further programmed to authenticate the accessing user if the authentication information of the authentication profile and the collected authentication information of the challenge response match.

14. The authentication system in accordance with Claim 7, wherein the processor is further programmed to transmit the a token to the user device that indicates the user is authenticated to access the secure data.

15. A non-transitory computer-readable storage media (306) for authenticating a user for access to secure data, the computer-readable storage media having computer-executable instructions embodied thereon, wherein, when executed by at least one processor (304), the computer-executable instructions cause the processor to perform the method according to Claim 1.

## Patentansprüche

1. Verfahren (400) zum Authentisieren eines zugreifenden Anwenders zum Zugreifen auf sichere Daten von einem ersten Datenanbieter unter Verwendung eines Authentisierungssystems, das einem zweiten Datenanbieter zugeordnet ist, wobei der erste Datenanbieter von dem zweiten Datenanbieter verschieden ist, wobei das Verfahren Folgendes umfasst:
Empfangen (402) von Anwenderberechtigungsnachweisen und Authentisierungsinformationen, die einem sich anmeldenden Anwender zugeordnet sind, durch das Authentisierungssystem des zweiten Datenanbieters, wobei die empfangenen Anwenderberechtigungsnachweise Zahlungskarteninformationen enthalten, die für die Verarbeitung von Zahlungskartentransaktionen verwendbar sind, wobei die empfangenen Anwenderberechtigungsnachweise ebenfalls zum Zugreifen auf den ersten Datenanbieter verwendbar sind;
Identifizieren eines dem sich anmeldenden Anwender zugeordneten Authentisierungsprofils durch das Authentisierungssystem, wobei das Authentisierungsprofil zuvor in dem Authentisierungssystem gespeichert worden ist;
Verknüpfen der empfangenen Anwenderberechtigungsnachweise und der Authentisierungsinformationen mit dem Authentisierungsprofil durch das Authentisierungssystem;
Speichern (404) der empfangenen Anwenderberechtigungsnachweise und Authentisierungsinformationen in dem Authentisierungsprofil, wobei das Authentisierungsprofil durch den zweiten Datenanbieter zum Authentisieren von Zahlungskartentransaktionen verwendbar ist;
Empfangen (406) von dem zugreifenden Anwender zugeordneten Zahlungskarteninformationen als Reaktion darauf, dass der zugreifende Anwender auf in dem ersten Datenanbieter gespeicherte sichere Daten zuzugreifen versucht, durch das Authentisierungssystem von dem ersten Datenanbieter;
Vergleichen der von dem ersten Datenanbieter empfangenen Zahlungskarteninformationen des zugreifenden Anwenders mit den Anwenderberechtigungsnachweisen in dem gespeicherten Authentisierungsprofil für den sich anmeldenden Anwender;
Senden (410) einer Authentisierungsabfragenachricht auf der Grundlage des gespeicherten Authentisierungsprofils an eine dem zugreifenden Anwender zugeordnete Anwendervorrichtung als Antwort auf den Vergleich, wobei die Authentisierungsabfragenachricht die Anwendervorrichtung zu Authentisierungsinformationen auffordert, wobei die Anwendervorrichtung von dem ersten Datenanbieter und von dem zweiten Datenanbieter getrennt ist;
Empfangen (412) einer Authentisierungsantwort von der Anwendervorrichtung, wobei die Authentisierungsantwort erhobene Authentisierungsinformationen enthält;
Authentisieren (414) des zugreifenden Anwenders auf der Grundlage des Authentisierungsprofils für den sich anmeldenden Anwender und der erhobenen Authentisierungsinformationen in der Authentisierungsantwort durch das Authentisierungssystem, um zu bestimmen, dass der zugreifende Anwender der sich anmeldende Anwender ist; und
Benachrichtigen (416) des ersten Datenanbieters, dass der zugreifende Anwender authentisiert ist, durch das Authentisierungssystem, wobei der erste Datenanbieter als Reaktion darauf, dass der zugreifende Anwender authentisiert ist, zulässt, dass der zugreifende Anwender auf die sicheren Daten zugreift.

2. Verfahren nach Anspruch 1, wobei die Authentisierungsinformationen biometrische Daten und/oder Bilddaten, die von dem sich anmeldenden Anwender empfangen werden, enthalten.

3. Verfahren nach Anspruch 1, wobei die Authentisierungsinformationen Vorrichtungsdaten und/oder einen eindeutigen Identifizierer, der in der Anwendervorrichtung gespeichert ist, enthalten.

4. Vorrichtung nach Anspruch 1, wobei das Authentisieren des zugreifenden Anwenders auf der Grundlage des Authentisierungsprofils für den sich anmeldenden Anwender und der erhobenen Authentisierungsinformationen in der Authentisierungsantwort ferner Folgendes umfasst:
Vergleichen des Authentisierungsprofils und der erhobenen Authentisierungsinformationen; und
Authentisieren des zugreifenden Anwenders, falls die Authentisierungsinformationen des Authentisierungsprofils und die erhobenen Authentisierungsinformationen zusammenpassen.

5. Verfahren nach Anspruch 1, das ferner dafür konfiguriert ist, den zugreifenden Anwender zu authentisieren, falls die Authentisierungsinformationen des Authentisierungsprofils und die erhobenen Authentisierungsinformationen der Authentisierungsantwort zusammenpassen.

6. Verfahren nach Anspruch 1, das ferner das Senden eines Tokens, das angibt, dass der zugreifende Anwender zum Zugreifen auf die sicheren Daten authentisiert ist, an die Anwendervorrichtung durch das Authentisierungssystem umfasst.

7. Authentisierungssystem (100) zum Authentisieren eines zugreifenden Anwenders zum Zugreifen auf sichere Daten von einem ersten Datenanbieter, wobei das Authentisierungssystem einem zweiten Datenanbieter zugeordnet ist, wobei der erste Datenanbieter von dem zweiten Datenanbieter verschieden ist, wobei das Authentisierungssystem einen Prozessor (304) und einen Speicher (306) in Kommunikation mit dem Prozessor umfasst, wobei der Prozessor für Folgendes programmiert ist:
Empfangen von Anwenderberechtigungsnachweisen und Authentisierungsinformationen, die einem sich anmeldenden Anwender zugeordnet sind, wobei die empfangenen Anwenderberechtigungsnachweise Zahlungskarteninformationen enthalten, die für die Verarbeitung von Zahlungskartentransaktionen verwendbar sind, wobei die empfangenen Anwenderberechtigungsnachweise ebenfalls zum Zugreifen auf den ersten Datenanbieter verwendbar sind;
Identifizieren eines dem sich anmeldenden Anwender zugeordneten Authentisierungsprofils durch das Authentisierungssystem, wobei das Authentisierungsprofil zuvor in dem Authentisierungssystem gespeichert worden ist;
Verknüpfen der empfangenen Anwenderberechtigungsnachweise und der Authentisierungsinformationen mit dem Authentisierungsprofil durch das Authentisierungssystem;
Speichern der empfangenen Anwenderberechtigungsnachweise und Authentisierungsinformationen in dem Authentisierungsprofil, wobei das Authentisierungsprofil durch den zweiten Datenanbieter zum Authentisieren von Zahlungskartentransaktionen verwendbar ist;
Empfangen von dem zugreifenden Anwender zugeordneten Zahlungskarteninformationen als Reaktion darauf, dass der zugreifende Anwender auf in dem ersten Datenanbieter gespeicherte sichere Daten zuzugreifen versucht;
Vergleichen der von dem ersten Datenanbieter empfangenen Zahlungskarteninformationen des zugreifenden Anwenders mit den Anwenderberechtigungsnachweisen in dem gespeicherten Authentisierungsprofil für den sich anmeldenden Anwender;
Senden einer Authentisierungsabfragenachricht auf der Grundlage des gespeicherten Authentisierungsprofils an eine dem zugreifenden Anwender zugeordnete Anwendervorrichtung als Antwort auf den Vergleich, wobei die Authentisierungsabfragenachricht die Anwendervorrichtung zu Authentisierungsinformationen auffordert, wobei die Anwendervorrichtung von dem ersten Datenanbieter und von dem zweiten Datenanbieter getrennt ist;
Empfangen einer Authentisierungsantwort von der Anwendervorrichtung, wobei die Authentisierungsantwort erhobene Authentisierungsinformationen enthält;
Authentisieren des zugreifenden Anwenders auf der Grundlage des Authentisierungsprofils für den sich anmeldenden Anwender und der erhobenen Authentisierungsinformationen in der Authentisierungsantwort, um zu bestimmen, dass der zugreifende Anwender der sich anmeldende Anwender ist; und
Benachrichtigen des ersten Datenanbieters, dass der zugreifende Anwender authentisiert ist, wobei der erste Datenanbieter als Reaktion darauf, dass der zugreifende Anwender authentisiert ist, zulässt, dass der zugreifende Anwender auf die sicheren Daten zugreift.

8. Authentisierungssystem nach Anspruch 7, wobei die Anwenderberechtigungsnachweise ferner eine Telefonnummer und/oder einen Anwendernamen und/oder ein Passwort enthalten.

9. Authentisierungssystem nach Anspruch 7, wobei die sicheren Daten einen medizinischen Datensatz und/oder ein Bankkonto und/oder einen Studentendatensatz enthalten.

10. Authentisierungssystem nach Anspruch 7, wobei die Authentisierungsinformationen biometrische Daten und/oder Bilddaten, die von dem sich anmeldenden Anwender empfangen werden, enthalten.

11. Authentisierungssystem nach Anspruch 7, wobei die Authentisierungsinformationen Vorrichtungsdaten und einen eindeutigen Identifizierer, der in der Anwendervorrichtung gespeichert ist, enthalten.

12. Authentisierungssystem nach Anspruch 7, wobei der Prozessor ferner zu Folgendem programmiert ist:
Vergleichen des Authentisierungsprofils und der erhobenen Authentisierungsinformationen; und
Authentisieren des zugreifenden Anwenders, falls die Authentisierungsinformationen des Authentisierungsprofils und die erhobenen Authentisierungsinformationen zusammenpassen.

13. Authentisierungssystem nach Anspruch 7, wobei der Prozessor ferner dafür programmiert ist, den zugreifenden Anwender zu authentisieren, falls die Authentisierungsinformationen des Authentisierungsprofils und die erhobenen Authentisierungsinformationen der Authentisierungsantwort zusammenpassen.

14. Authentisierungssystem nach Anspruch 7, wobei der Prozessor ferner dafür programmiert ist, an die Anwendervorrichtung ein Token zu senden, das angibt, dass der Anwender zum Zugreifen auf die sicheren Daten authentisiert ist.

15. Nichttransistorische computerlesbare Speichermedien (306) zum Authentisieren eines Anwenders zum Zugreifen auf sichere Daten, wobei die computerlesbaren Speichermedien durch einen Computer ausführbare Anweisungen aufweisen, die darauf verkörpert sind, wobei die durch einen Computer ausführbaren Anweisungen veranlassen, dass der Prozessor das Verfahren nach Anspruch 1 ausführt, wenn sie durch wenigstens einen Prozessor (304) ausgeführt werden.

## Revendications

1. Procédé (400) pour authentifier un utilisateur souhaitant avoir accès, destiné à accéder à des données sécurisées provenant d'un premier fournisseur de données, en utilisant un système d'authentification associé à un second fournisseur de données, le premier fournisseur de données étant différent du second fournisseur de données, le procédé comprenant :
la réception (402), par le système d'authentification du second fournisseur de données, d'accréditation d'utilisateur et d'informations d'authentification associées à un utilisateur souhaitant s'inscrire, l'accréditation d'utilisateur reçue incluant des informations de carte de paiement utilisables pour traiter des transactions de carte de paiement, l'accréditation d'utilisateur reçue étant également utilisable pour accéder au premier fournisseur de données ;
l'identification, par le système d'authentification, d'un profil d'authentification associé à l'utilisateur souhaitant s'inscrire, le profil d'authentification étant auparavant stocké dans le système d'authentification ;
la liaison, par le système d'authentification, de l'accréditation d'utilisateur et des informations d'authentification reçues au profil d'authentification ;
le stockage (404) de l'accréditation d'utilisateur et des informations d'authentification reçues dans le profil d'authentification, dans lequel le profil d'authentification est utilisable par le second fournisseur de données pour authentifier des transactions de carte de paiement ;
la réception (406), par le système d'authentification, à partir du premier fournisseur de données, d'informations de carte de paiement associées à l'utilisateur souhaitant avoir accès, en réponse au fait que l'utilisateur souhaitant avoir accès tente d'accéder à des données sécurisées stockées dans le premier fournisseur de données ;
la comparaison des informations de carte de paiement d'utilisateur souhaitant avoir accès, reçues du premier fournisseur de données, à l'accréditation d'utilisateur dans le profil d'authentification stocké pour l'utilisateur souhaitant s'inscrire ;
la transmission (410), en réponse à la comparaison, d'un message d'invite, sur la base du profil d'authentification stocké, à un dispositif d'utilisateur associé à l'utilisateur souhaitant avoir accès, le message d'invite invitant le dispositif d'utilisateur à fournir des informations d'authentification, le dispositif d'utilisateur étant distinct du premier fournisseur de données et du second fournisseur de données ;
la réception (412) d'une réponse d'invite à partir du dispositif d'utilisateur, la réponse d'invite incluant des informations d'authentification collectées ;
l'authentification (414), par le système d'authentification, de l'utilisateur souhaitant avoir accès, sur la base du profil d'authentification pour l'utilisateur souhaitant s'inscrire et des informations d'authentification collectées dans la réponse d'invite, pour déterminer que l'utilisateur souhaitant avoir accès est l'utilisateur souhaitant s'inscrire ; et
la notification (416), par le système d'authentification, au premier fournisseur de données, que l'utilisateur souhaitant avoir accès est authentifié, dans lequel le premier fournisseur de données permet à l'utilisateur souhaitant avoir accès d'accéder aux données sécurisées en réponse au fait que l'utilisateur souhaitant avoir accès est authentifié.

2. Procédé selon la revendication 1, dans lequel les informations d'authentification incluent des données biométriques et/ou des données d'image, reçues de l'utilisateur souhaitant s'inscrire.

3. Procédé selon la revendication 1, dans lequel les informations d'authentification incluent des données de dispositif et/ou un identifiant unique, stockés sur le dispositif d'utilisateur.

4. Procédé selon la revendication 1, dans lequel l'authentification de l'utilisateur souhaitant avoir accès, sur la base du profil d'authentification pour l'utilisateur souhaitant s'inscrire et des informations d'authentification collectées dans la réponse d'invite, comprend en outre :
la comparaison du profil d'authentification et des informations d'authentification collectées ; et
l'authentification de l'utilisateur souhaitant avoir accès si les informations d'authentification du profil d'authentification et les informations d'authentification collectées sont assorties.

5. Procédé selon la revendication 1, en outre configuré pour authentifier l'utilisateur souhaitant avoir accès si les informations d'authentification du profil d'authentification et les informations d'authentification collectées de la réponse d'invite sont assorties.

6. Procédé selon la revendication 1, comprenant en outre la transmission, par le système d'authentification, d'un jeton, qui indique que l'utilisateur souhaitant avoir accès est authentifié pour accéder aux données sécurisées, au dispositif d'utilisateur.

7. Système d'authentification (100) pour authentifier un utilisateur souhaitant avoir accès, destiné à accéder à des données sécurisées provenant d'un premier fournisseur de données, le système d'authentification étant associé à un second fournisseur de données, le premier fournisseur de données étant différent du second fournisseur de données, le système d'authentification comprenant un processeur (304) et une mémoire (306) en communication avec le processeur, dans lequel le processeur est programmé pour :
recevoir une accréditation d'utilisateur et des informations d'authentification associées à un utilisateur souhaitant s'inscrire, l'accréditation d'utilisateur reçue incluant des informations de carte de paiement utilisables pour traiter des transactions de carte de paiement, l'accréditation d'utilisateur reçue étant également utilisable pour accéder au premier fournisseur de données ;
identifier, par le système d'authentification, un profil d'authentification associé à l'utilisateur souhaitant s'inscrire, le profil d'authentification étant auparavant stocké dans le système d'authentification ;
lier, par le système d'authentification, l'accréditation d'utilisateur et les informations d'authentification reçues au profil d'authentification ;
stocker l'accréditation d'utilisateur et les informations d'authentification reçues dans le profil d'authentification, dans lequel le profil d'authentification est utilisable par le second fournisseur de données pour authentifier des transactions de carte de paiement ;
recevoir des informations de carte de paiement associées à l'utilisateur souhaitant avoir accès, en réponse au fait que l'utilisateur souhaitant avoir accès tente d'accéder à des données sécurisées stockées dans le premier fournisseur de données ;
comparer les informations de carte de paiement d'utilisateur souhaitant avoir accès, reçues du premier fournisseur de données, à l'accréditation d'utilisateur dans le profil d'authentification stocké pour l'utilisateur souhaitant s'inscrire ;
transmettre, en réponse à la comparaison, un message d'invite, sur la base du profil d'authentification stocké, à un dispositif d'utilisateur associé à l'utilisateur souhaitant avoir accès, le message d'invite invitant le dispositif d'utilisateur à fournir des informations d'authentification, le dispositif d'utilisateur étant distinct du premier fournisseur de données et du second fournisseur de données ;
recevoir une réponse d'invite à partir du dispositif d'utilisateur, la réponse d'invite incluant des informations d'authentification collectées ;
authentifier l'utilisateur souhaitant avoir accès, sur la base du profil d'authentification pour l'utilisateur souhaitant s'inscrire et des informations d'authentification collectées dans la réponse d'invite, pour déterminer que l'utilisateur souhaitant avoir accès est l'utilisateur souhaitant s'inscrire ; et
notifier, au premier fournisseur de données, que l'utilisateur souhaitant avoir accès est authentifié, dans lequel le premier fournisseur de données permet à l'utilisateur souhaitant avoir accès d'accéder aux données sécurisées en réponse au fait que l'utilisateur souhaitant avoir accès est authentifié.

8. Système d'authentification selon la revendication 7, dans lequel l'accréditation d'utilisateur incluent en outre un numéro de téléphone, et/ou un nom d'utilisateur, et/ou un mot de passe.

9. Système d'authentification selon la revendication 7, dans lequel les données sécurisées incluent un dossier médical, et/ou un compte bancaire, et/ ou un dossier scolaire.

10. Système d'authentification selon la revendication 7, dans lequel les informations d'authentification incluent des données biométriques et/ou des données d'image, reçues de l'utilisateur souhaitant s'inscrire.

11. Système d'authentification selon la revendication 7, dans lequel les informations d'authentification incluent des données de dispositif et/ou un identifiant unique, stockés sur le dispositif d'utilisateur.

12. Système d'authentification selon la revendication 7, dans lequel le processeur est en outre programmé pour :
comparer le profil d'authentification et les informations d'authentification collectées ; et
authentifier l'utilisateur souhaitant avoir accès si les informations d'authentification du profil d'authentification et les informations d'authentification collectées sont assorties.

13. Système d'authentification selon la revendication 7, le processeur étant en outre programmé pour authentifier l'utilisateur souhaitant avoir accès si les informations d'authentification du profil d'authentification et les informations d'authentification collectées de la réponse d'invite sont assorties.

14. Système d'authentification selon la revendication 7, dans lequel le processeur est en outre programmé pour transmettre un jeton, au dispositif d'utilisateur, qui indique l'utilisateur est authentifié pour accéder aux données sécurisées.

15. Support de stockage non transitoire lisible par ordinateur (306) pour authentifier un utilisateur, destiné à accéder à des données sécurisées, le support de stockage lisible par ordinateur ayant des instructions exécutables par ordinateur incorporées sur celui-ci, dans lequel, lorsqu'elles sont exécutées par au moins un processeur (304), les instructions exécutables par ordinateur font en sorte que le processeur réalise le procédé selon la revendication 1.
